# FASCICULE DE BREVET EUROPEEN

(11) **EP 1 763 962 B1**
(45) Date de publication et mention de la délivrance du brevet: **06.01.2010**
(21) Numéro de dépôt: 05774187.8
(22) Date de dépôt: 05.07.2005
(51) Int. Cl.: H04N 9/31

(54) **PROJECTEUR D'IMAGES NUMERIQUES POUR GRAND ECRAN**
DIGITALER BILDPROJEKTOR MIT GROSSBILDSCHIRM
LARGE SCREEN DIGITAL IMAGE PROJECTOR

(30) Priorité: 06.07.2004 FR 0451464
(43) Date de publication de la demande: 21.03.2007
(73) Titulaire: Thomson Licensing, 92100 Boulogne-Billancourt (FR)
(72) Inventeur: DRAZIC, Valter, F-35830 Betton (FR); SARAYEDDINE, Khaled, F-35410 NOUVOITOU (FR)
(74) Mandataire: Le Dantec, Claude
(86) Numéro de dépôt international: PCT/EP2005/053208
(87) Numéro de publication internationale: WO 2006/003205

(56) Documents cités:
- EP-A- 0 777 389
- US-A- 5 612 753
- US-A1- 2002 063 854

## Description

### 1. Domaine de l'invention.

La présente invention concerne la projection d'images et plus précisément la projection numérique sur grand écran, par exemple de type cinéma.

### 2. Etat de l'art.

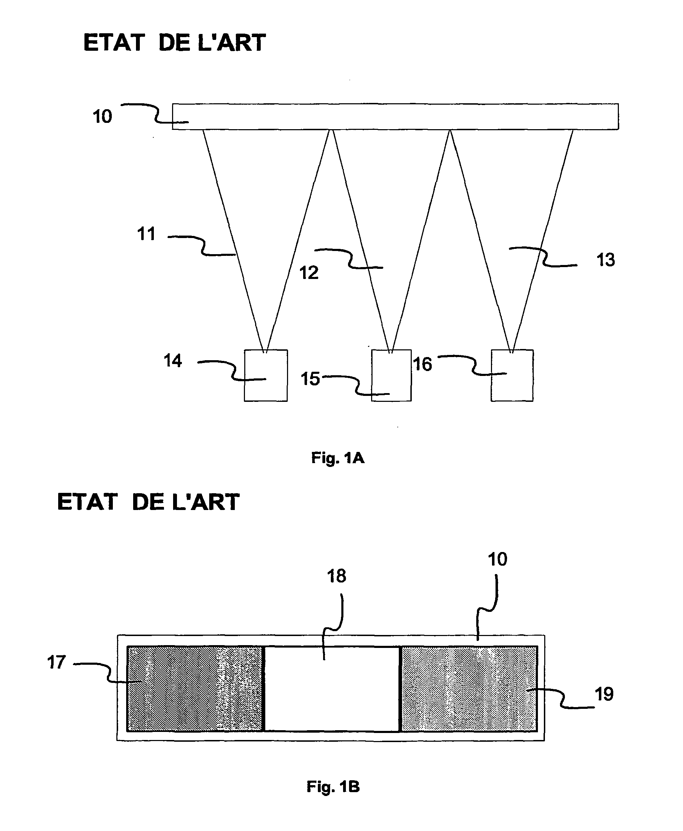

Selon l'état de la technique, afin de projeter une image de très grande taille, un seul projecteur classique ne pouvant pas projeter une image suffisamment lumineuse lorsqu'un très grand écran est utilisé, on met en oeuvre plusieurs projecteurs tels qu'illustrés en figure 1A. Ainsi, des projecteurs numériques 14 à 16 projettent chacun une image sur un même écran 10. Les faisceaux transmis 11 à 13 associés à chacun des projecteurs 14 à 16 sont juxtaposés. Des moyens de traitement électroniques relativement complexes permettent de rendre invisible la séparation entre les trois images projetés telles qu'illustrées en figure 1B. Cette technique présente l'inconvénient de ne pas permettre une brillance uniforme des trois images 17 à 19, notamment lorsque la lampe des projecteurs 14 à 16 vieillit. Il peut exister également des différences de couleurs sur les images projetées.

Les documents US 5 612 753 et US2002/063854 divulguent des systèmes de projection avec deux faisceaux modulés chacun par un modulateur spatial de lumière.

Le document EP-A-0 777 389 divulgue des modules à cristal liquide, alimentés chacun par une source de lumière via des fibres optiques.

### 3. Résumé de l'invention.

L'invention a pour but de pallier ces inconvénients de l'art antérieur.

Plus particulièrement, l'invention a pour objectif de permettre une projection numérique d'image de grande qualité sur un écran de grande taille, avec notamment une brillance uniforme.

A cet effet, l'invention propose un système de projection dont les caractéristiques sont énoncées dans la revendication indépendante 1. Des modes de réalisation avantageux font l'objet des revendications dependantes.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1A et 1B illustrent respectivement un système de projection connu en soi et des images projetées par le système ;
- la figure 2 est un synoptique très schématique d'un système de projection selon l'invention ;
- la figure 3 présente une image projetée sur un écran par le système de la figure 2 ;
- la figure 4 décrit un dispositif de projection du système de la figure 2;
- la figure 5 illustre la mise en oeuvre de roues colorées dans le système selon la figure 2 ;

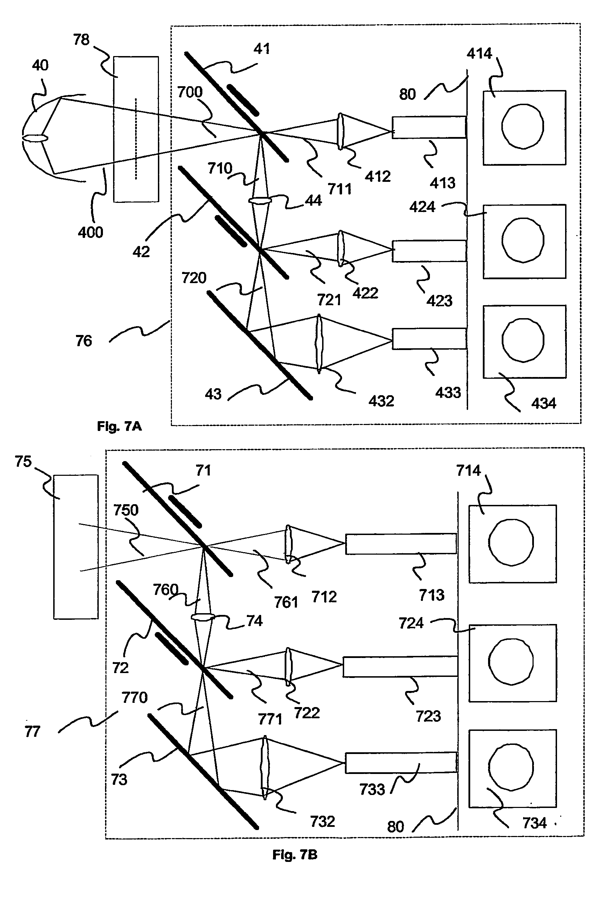

- les figures 6, 7A, 7B et 8 présente une variante de l'invention et la figure 9 une image projetée correspondante ;
- la figure 10 décrit une autre variante de l'invention ;
- la figure 11 présente un procédé de gestion des images mis en oeuvre dans les dispositifs selon les figures 2, 6 et 10 ; et
- la figure 12 illustre une variante de l'invention permettant une projection d'image à haute résolution.

### 5. Description détaillée de l'invention.

Le principe général de l'invention repose donc sur la mise en oeuvre dans un même système de projection de plusieurs imageurs éclairés chacun par un faisceau d'illumination issus d'un même faisceau source polychromatique.

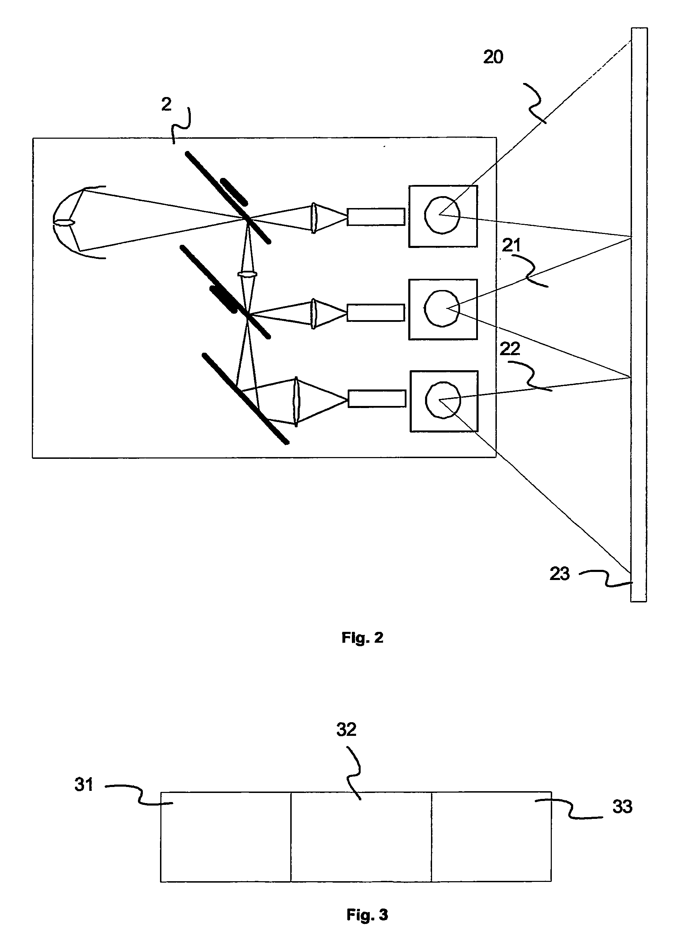

La **figure 2** est un synoptique très schématique d'un système de projection selon l'invention qui comprend :
- un dispositif 2 de projection comprenant une lampe 40 ; et
- un écran de projection qui définit une surface de projection 23.

Afin de faciliter la lecture de la figure 2, les échelles et les angles de projection ne sont pas respectées entre l'écran 23 de grande taille et le dispositif 2 de petite taille qui est situé à plusieurs mètres de l'écran 23.

Le dispositif 2 de projection projette une image segmentée sur la surface de projection 23 en émettant trois faisceaux d'imagerie 20 à 22 distincts. La surface de projection est de grande taille et peut être adaptée à différents type de projection de type cinéma. Elle est, par exemple, plane, ou quasiment plane (avec léger rayon de courbure pour éviter une distorsion) cylindrique ou sphérique.

L'image segmentée telle qu'illustrée en regard de la figure 3 comprend trois parties 31 à 33 juxtaposées, obtenues respectivement par les faisceaux d'imageries 20 à 22. Pour une image source uniforme, les trois parties 31 à 33 présentent, grâce à l'invention, des couleurs uniformes et une brillance uniforme et qui reste uniforme dans le temps même lorsque la lampe 40 vieillit.

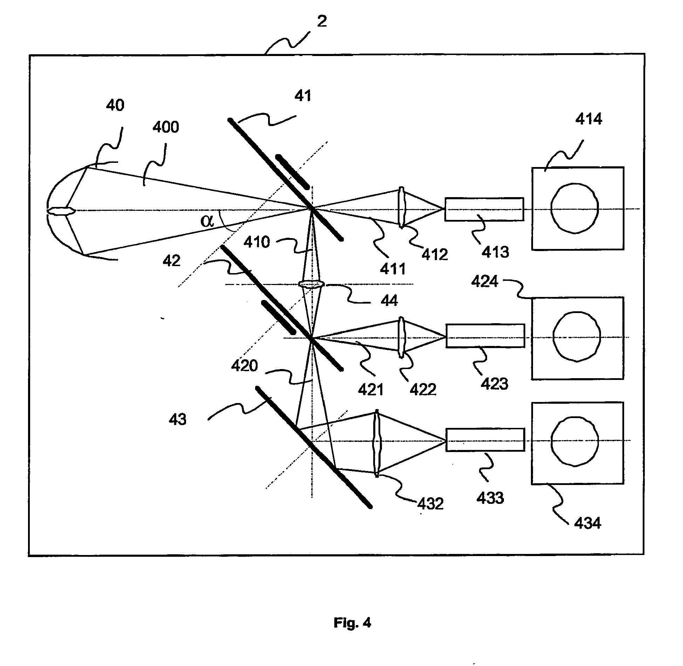

La **figure 4** illustre plus en détails le dispositif 2 qui comprend une lampe 40 et un ensemble d'imagerie.

L'ensemble d'imagerie contient lui-même:
- une première roue colorée 41 ;
- une lentille de focalisation 44 ;
- une seconde roue colorée 42 ;
- un miroir 43
- trois lentilles de focalisation 412, 422 et 432 ;
- trois guides de lumières 413, 423 et 433 ; et
- trois imageurs 414, 424 et 434.

La lampe 40 avec réflecteur elliptique émet un faisceau source polychromatique 400 focalisé sur la roue colorée 41. La lampe 40 est, par exemple, de type Xénon qui présente l'avantage d'avoir une température égale à 6500° (proche de celle du soleil) et un spectre relativement plat. Néanmoins, tout type de lampe émettant une lumière polychromatique adaptée à une projection sur grand écran peut être utilisée. Afin d'obtenir une distribution spectrale uniforme (notamment dans le cas d'une utilisation d'une lampe qui n'est pas de type Xénon), un filtre de réjection peut être placée entre la lampe et la première roue colorée.

La roue colorée 41 est éclairée par le faisceau source polychromatique 400. La roue colorée 41 est inclinée par rapport à l'axe du faisceau 400, d'un angle α qui permet, selon les caractéristiques de la roue colorée 41, une séparation spatiale en deux faisceaux. Cet angle α peut prendre une valeur quelconque comprise entre 25° et 65°. Préférentiellement, cet angle α est égal à 45°. Ainsi, la roue colorée 41 sépare le faisceau 400 en un premier faisceau monochromatique 411 (c'est-à-dire qui comprend une seule couleur primaire rouge, verte ou bleue) et en un faisceau bicolore 410 (c'est-à-dire qui comprend deux couleurs primaires rouge, verte ou bleue).

La lentille 44 focalise alors le faisceau bicolore 410 sur la roue colorée 42 qui est inclinée par rapport à l'axe du faisceau 410, d'un angle qui permet, selon les caractéristiques de la roue colorée 42, une séparation spatiale en deux faisceaux monochromes 420 et 422. Préférentiellement, cet angle est égal à 45°.

Les lentilles 412, 422 et 432 focalisent respectivement les faisceaux 411, 421 et 420 sur l'entrée des guides de lumières 413, 423 et 433.

Les guides de lumière 413, 423 et 433 sont par exemple des barreaux intégrateurs ou des guides creux avec parois réfléchissantes.

Les sorties des guides de lumière 413, 423 et 433 sont préférentiellement situées dans un même plan et sont respectivement placées sur l'entrée de moteurs optiques comprenant respectivement les imageurs 414, 424 et 434 qui produisent respectivement les faisceaux 20 à 22. Chaque moteur optique comprend une lentille qui image la sortie du guide de lumière 413, 423 ou 433 associé sur l'imageur correspondant et un objectif permettant la projection sur un écran. Les moteurs optiques sont agencés de sorte à ce que les images 31 à 33 soient juxtaposées très précisément sur la surface de projection 23. Selon une première configuration, l'axe des objectifs des moteurs optiques est décalé par rapport à l'axe de l'imageur associé, les axes des objectifs et des imageurs restant parallèles, ce qui permet d'orienter les faisceaux d'imagerie créés par chacun des imageurs. Selon une seconde configuration, les objectifs subissent une rotation (ou « tilt » en anglais) de sorte à ce que les axes des objectifs soient orientés dans la direction de projection.

Les imageurs 413, 423 et 433 sont, par exemple, du type DMD (« Appareil à Micromiroirs Numériques » de l'anglais « Digital Micromirrors Device » de la société Texas Instruments ®) insensibles à la polarisation. Ils peuvent également être du type LCD transmissif (Afficheur à cristaux liquides, de l'anglais « Liquid Crystal Display ») ou LCOS (Cristal liquide sur du silicium de l'anglais « Liquid Crystal On Silicon »). Dans le cadre d'une utilisation avec LCD ou LCOS, des moyens adaptés à la récupération de polarisation sont préférentiellement placés entre les guides de lumières et les imageurs. Ils sont pilotés par des moyens de contrôle qui permettent de créer l'image à projeter sous forme de trois parties 31 à 33.

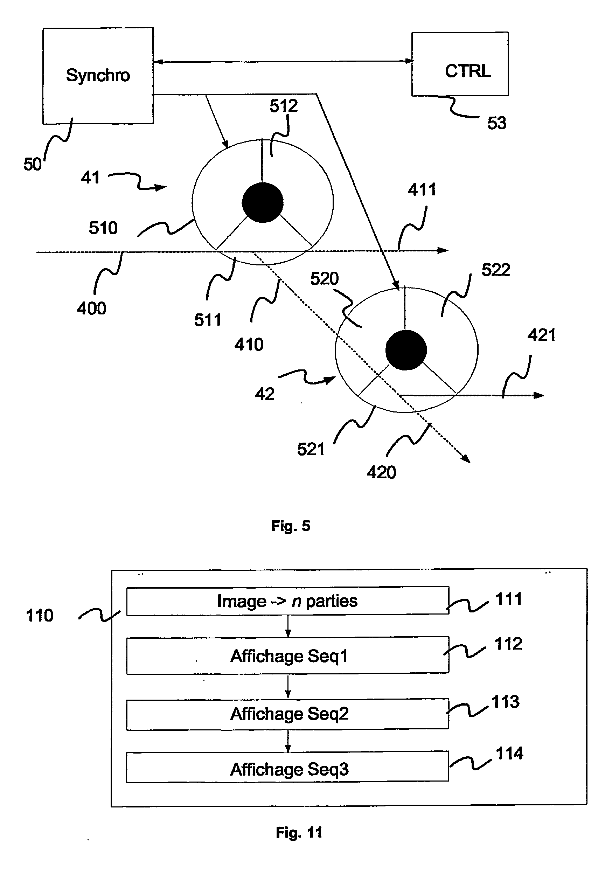

Selon l'invention, les roues 41 et 42 sont synchronisées de sorte qu'à chaque instant, les imageurs 413, 423 et 433 soient éclairées par trois faisceaux 411, 421 et 420 de couleurs différentes. Ainsi, la **figure 5** illustre la synchronisation des roues 41 et 42.

Les roues 41 et 42 comprennent chacunes trois segments qui réfléchissent ou transmettent des couleurs distinctes vers un imageur. Ainsi, la roue 41 (respectivement 42) comprend trois segments 510 à 512 (respectivement 520 à 522).

Les segments 510 à 512 transmettent respectivement le rouge, le vert et le bleu et réfléchissent donc respectivement le cyan (mélange de bleu et de vert), le magenta (mélange de bleu et de rouge) et le jaune (mélange de vert et de rouge). Ils contiennent donc des filtres permettant de réfléchir deux couleurs distinctes.

Les segments 520 à 522 transmettent respectivement le vert, le bleu et le rouge et réfléchissent donc respectivement le magenta, le jaune et le cyan. Ils contiennent donc des filtres permettant de réfléchir deux couleurs distinctes.

Des moyens de synchronisation 50 positionnent les segments colorés de sorte que, à chaque instant, la roue colorée 42 transmet l'une des couleurs du faisceau 410 bicolore et réfléchit la seconde couleur du faisceau 410. Par ailleurs, des moyens de contrôle 53 des imageurs 414, 424 et 434 définissant la couleur projetée pour chacun de ces imageurs coopèrent avec les moyens de synchronisation 50 pour qu'à chaque instant, la couleur de la partie d'image projetée par un imageur corresponde à la couleur du faisceau éclairant cet imageur.

Les trois faisceaux 411, 421 et 420 entrant dans les guides de lumière sont de couleurs différentes rouge, vert ou bleu. De plus, dans une même séquence, les roues tournant, les trois imageurs 414, 424 et 434 sont éclairés successivement par les trois couleurs. On obtient ainsi une grande efficacité optique et il y a très peu de perte de lumière dans le faisceau d'illumination. De plus, les parties d'image 31, 32 et 33 sont uniformes puisque les faisceaux d'illumination monochromes éclairant les imageurs sont issus d'une même source. Le contrôle de la brillance est simplifié puisqu'il suffit d'agir sur une seule source.

A titre illustratif, la roue colorée 41 permet une séquence rouge (R), vert (V), bleu (B), notée RVB, dans le faisceau transmis 411 lorsque le faisceau 400 éclaire successivement les segments 510, 511 et 512. De manière synchrone, la roue colorée 42 permet une séquence BRV (Bleu-Rouge-Vert) dans le faisceau transmis 421 (obtenue par réflexion du faisceau 410) et une séquence VBR (Vert-Bleu-Rouge) dans le faisceau réfléchi 420(obtenue par réflexion du faisceau 410) lorsque le faisceau 400 éclaire successivement les segments 520, 521 et 522. Bien entendu, selon une variante de l'invention (mettant en oeuvre un sens de rotation différent ou un ordre différent des segment 520 à 522), la roue colorée 42 peut, transmettre la séquence VBR et réfléchir la séquence BRV lorsque la roue 41 transmet la séquence RVB, cette configuration permettant trois faisceaux de couleurs distinctes à l'entrée des imageurs 414, 424 et 434.

Selon une variante de réalisation, les segments 520 à 512 transmettent respectivement le jaune, le cyan et le magenta et réfléchissent donc respectivement le bleu, le rouge et le vert. Ils contiennent donc des filtres permettant de réfléchir une couleur qui présente l'avantage d'être plus simple à réaliser puisque on a un filtre réflectif à bande étroite réfléchissant une seule couleur (et non un filtre à deux bandes étroites ou un filtre à une seule bande large). Les roues étant parfaitement synchronisées, le résultat est le même que précédemment puisque le faisceau 410 est bicolore et que chacun des segments transmet alors une seule couleur et réfléchit une seule couleur (à titre illustratif, le segment 520 transmettant le jaune reçoit un faisceau 410 comprenant du vert et du bleu ; il transmet donc le vert et réfléchit le bleu de la même manière que le ferait un segment transmettant uniquement le vert).

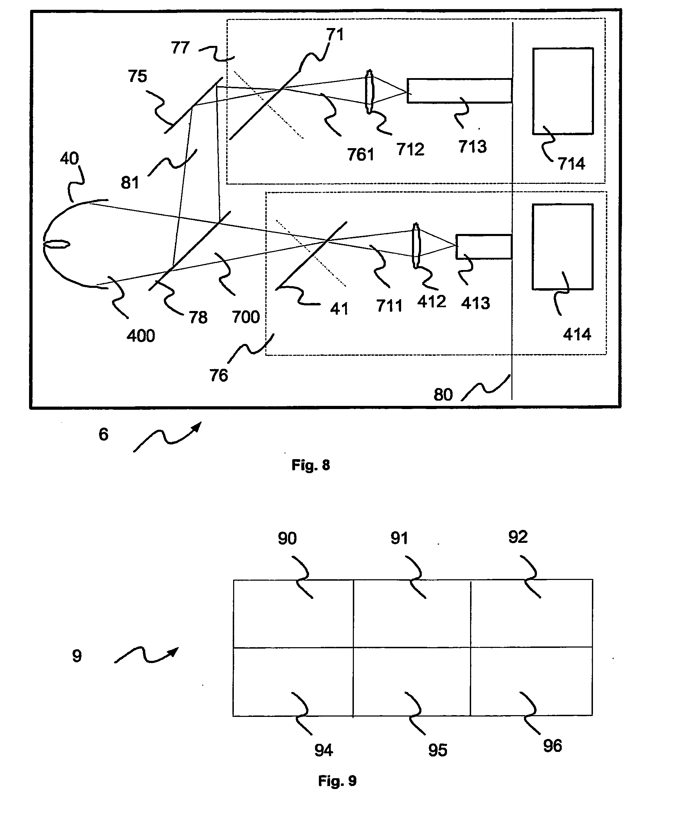

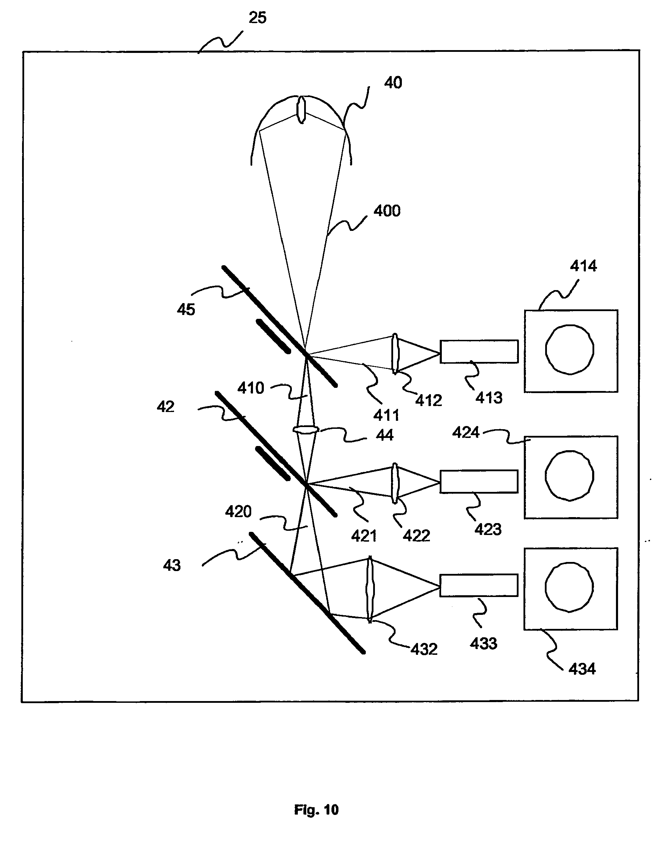

Selon une variante de l'invention illustrée en regard de la **figure 10****,** on met en oeuvre un dispositif de projection 25 présentant une structure selon laquelle la roue colorée 41 est remplacée par une roue colorée 45 qui réfléchit une seule couleur, la lampe 40 étant positionnée de manière adaptée. La roue colorée 45 transmet un faisceau 410 vers la roue colorée 42 qui est synchronisée avec la roue colorée 41 de sorte à transmettre une seule couleur du faisceau incident 410 et réfléchir une seule couleur comme précédent décrit en regard de la figure 9. A titre illustratif, la roue colorée 45 transmet une séquence RVB, vers l'imageur 414 alors que de manière synchrone, la roue colorée 42 transmet des séquences BRV ou VBR vers les imageurs 424 ou 434.

Le dispositif 25 comprend, par ailleurs, les mêmes éléments que le dispositif 2, qui portent les mêmes références et ne seront donc pas décrit davantage.

La structure du dispositif 25 présente l'avantage de mettre en oeuvre deux roues colorées qui réfléchissent une seule couleur. Elles peuvent donc être identiques et comprennent des filtres à bandes étroites monochrome, particulièrement avantageuses (simplicité de fabrication, rendement élevé).

La **figure 11** illustre un algorithme 110 de gestion d'une image à projeter mis en oeuvre dans les moyens de contrôle 53. Cet algorithme prévoit notamment des étapes de découpe de chaque image mis en oeuvre par des moyens de découpe et des étapes de sélection d'information représentative d'une sous-image correspondant à une couleur primaire mis en oeuvre par des moyens correspondant. Ces moyens sont, par exemple, des moyens matériels de type ASIC ou logiciel adapté mémorisé dans une mémoire et mis en oeuvre sur un processeur.

Les moyens de découpe de l'image peuvent être mis en oeuvre, selon l'invention, dans l'appareil de projection ou en amont, le signal entrant dans l'appareil de projection distinguant les sous-images.

Lorsqu'une image doit être projetée, au cours d'une étape 111, les moyens de contrôle découpent (ou divisent) l'image en p parties correspondant au nombre de sous-images juxtaposées projetées (des imageurs étant mis en oeuvre en parallèle par le dispositif de projection), la division se faisant en fonction de la position et du format des imageurs (par exemple, découpe de l'image en trois bandes adjacentes au format 16/9 tel que représenté en figure 3 si le dispositif de projection comprend des imageurs au format 16/9 placés cote à cote) pour obtenir trois sous-images indépendantes (ou du moins une information représentative de ces sous-images). Le dispositif 2 comprend trois imageurs affichant trois parties d'images de même taille. Appliqué à ce dispositif l'algorithme de gestion découpe donc une image en trois parties égales correspondant aux parties à afficher 31 à 33.

Puis, au cours d'une étape 112, les moyens de contrôle 53 sélectionnent et transmettent les informations de chacun des trois sous-images correspondant à une première couleur à afficher à un imageur associé (les sous images correspondant aux parties 31 à 33 sont respectivement affichées par les imageurs 414, 424 et 434). Par ailleurs, les moyens de contrôle 53 commandent les roues colorées 41 et 42 et donc les couleurs des faisceaux d'illumination éclairant les imageurs (ou, selon une variante, reçoivent une information indiquant la position des roues colorées et en déduisent ces couleurs de faisceaux d'illumination). Selon un exemple décrit précédemment, les faisceaux 400, 421 et 420 correspondent respectivement à des séquences RVB, BRV et VBR. Aussi, au cours de l'étape 112, la première sous-image est rouge, la seconde bleue et la troisième verte (premières couleurs des faisceaux éclairant les imageurs 414, 424 et 434). Les moyens de gestion 53 contrôlent alors les imageurs 414, 424 et 434 en fonction de la couleur des sous-images monochromes à afficher à chaque instant.

Puis, au cours d'une étape 113, les moyens de gestion 53 contrôle les imageurs 414, 424 et 434 pour afficher respectivement des sous-images correspondant aux deuxièmes couleurs des faisceaux éclairant les imageurs, soit selon l'exemple mentionné ci-avant, des première, deuxième et troisième sous-images monochromes respectivement verte, rouge et bleue.

Puis, au cours d'une étape 114, les moyens de gestion 53 contrôle les imageurs 414, 424 et 434 pour afficher respectivement des sous-images correspondant aux troisièmes couleurs des faisceaux éclairant les imageurs, soit selon l'exemple mentionné ci-avant, des première, deuxième et troisième sous-images respectivement bleue, verte et rouge.

Les transitions entre deux couleurs d'un faisceau éclairant un imageur pourront être traitées selon des méthodes adaptées : par exemple, absence d'affichage au cours des transitions, ou, au contraire, utilisation des transitions pour un affichage de couleurs désaturées en fonction des deux couleurs correspondant à la transition.

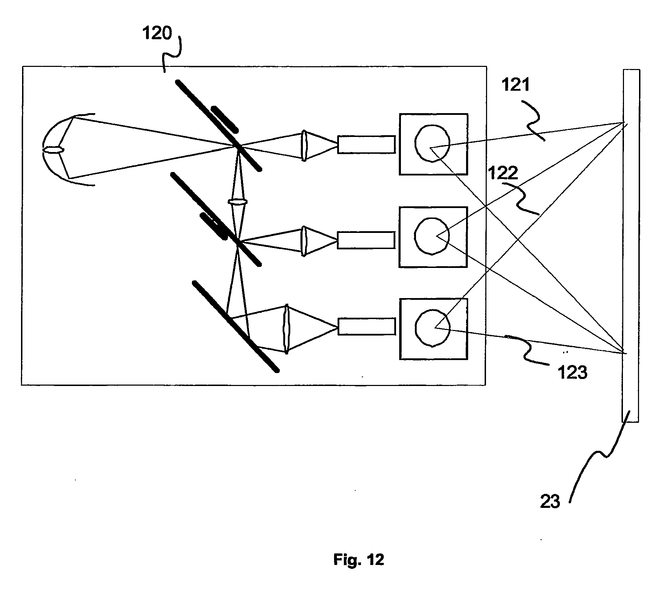

La **figure 12** présente un projecteur 120 à haute résolution selon une variante de l'invention (les échelles et les angles de projection n'étant pas respectées entre l'écran 23 de grande taille et le projecteur 120 de petite taille qui est situé à plusieurs mètres de l'écran).

Le projecteur 120 est tout à fait similaire au projecteur 2, à l'exception des moteurs optiques et des moyens de découpe d'image et de sélection qui sont configurés de sorte que les sous-images monochromes créées par les imageurs 414, 424 et 434 se superposent exactement. En effet, les moteurs optiques sont configurés selon l'une des méthodes exposées précédemment et appliquées au projecteur 2 (par exemple, décalage entre axes de chaque objectif et du moteur optique associé ou rotation des axes des objectifs) pour que les faisceaux monochromes, de couleurs différentes à un instant donné et représentatif de l'image à projeter éclairent une même partie de l'écran 23. Ainsi, dans le plan de projection les trois faisceaux 121 à 123 se superposent.

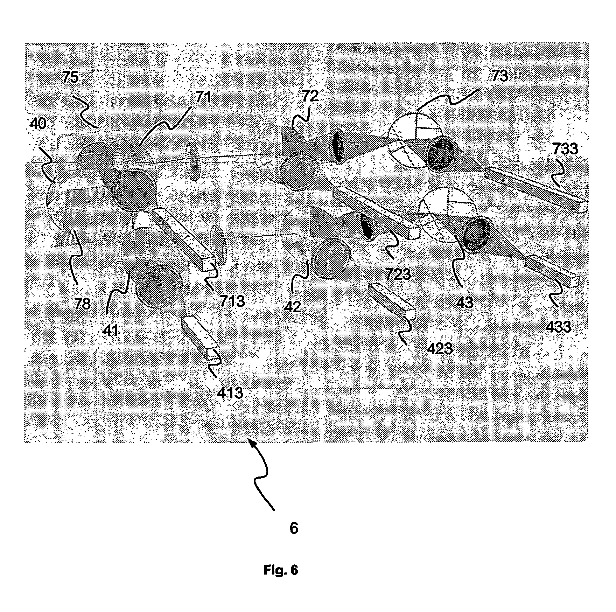

La **figure 6** présente une perspective d'un dispositif de projection 6 selon une variante de l'invention.

Le dispositif 6 permet une projection d'une image 9, telle qu'illustrée en regard de la figure 9 qui est découpée en six parties dont un sous-ensemble de trois parties supérieures 90 à 92 et un sous-ensemble trois inférieures 94 à 96. Ces deux sous-ensembles sont créées à l'aide respectivement de premier et second ensembles d'imagerie illustrés en regard des figures respectivement 7A et 7B.

L'image 9 ainsi générée présente l'avantage d'être uniforme.

Certains éléments du dispositif de projection 6 sont tout à fait similaire à des éléments du dispositif 2 et ne seront donc pas décrits davantage.

Le dispositif de projection 6 comprend dans sa partie inférieure :
- une lampe 40 ;
- des moyens de séparation 78 ; et
- un premier ensemble d'imagerie 76.

Le dispositif de projection 6 comprend dans sa partie supérieure :
- un miroir 75 à réflexion totale ; et
- un second ensemble d'imagerie 77.

Les moyens de séparation 78 séparent le faisceau source polychromatique 400 généré par la lampe 40 en deux faisceaux 700 et 81 tel qu'illustré selon une vue de coté en regard de la **figure 8****.**

Selon un premier mode de réalisation, les moyens de séparation 78 de type moyens de polarisation, préférentiellement de type polariseur à grille (par exemple Moxtek ®) qui peut être incliné entre 25° et 70° par rapport à l'axe du faisceau 400. Selon une variante, le polariseur est du type PBS (Séparateur de faisceau de polarisation de l'anglais « Polarisation Beam Splitter »). Dans ce cas, le polariseur est incliné d'un angle proche de 45° par rapport à l'axe du faisceau 400.

Selon un second mode de réalisation, les moyens de séparation 78 de type miroirs semi-transparents. Préférentiellement, le miroir comprend deux parties respectivement réfléchissante et transparente, qui peuvent être plus ou moins imbriquées (par exemple miroirs à points ou « dot mirrors » en anglais), la partie réfléchissante représentant la moitié de la surface du miroir. Selon une variante, le miroir comprend un traitement particulier qui permet de réfléchir 50% du flux incident et de transmettre les 50% résiduels. Ainsi, le faisceau 400 est divisé en deux faisceaux 700 et 81 de luminosités égales ou très proches.

Le second ensemble d'imagerie 77 est très similaire au premier ensemble d'imagerie 76.

Il comprend notamment :
- deux roues colorées 71 et 72 (qui remplacent les roues 41 et 42) ;
- une lentille de focalisation 74 (remplaçant la lentille 44) ;
- un miroir 73 (remplaçant le miroir 43) qui renvoie le faisceau 81 vers la roue 71 ;
- trois lentilles de focalisation 712, 722 et 732 (remplaçant les lentilles 412, 422 et 432) ;
- trois guides de lumières 713, 723 et 733 ; et
- trois imageurs 714, 724 et 734 (remplaçant les imageurs 414, 424 et 434).

On note que les moyens de séparation 78 et le miroir 75 permettent une focalisation du faisceau 81 sur la roue colorée 71.

Par ailleurs, les guides de lumières 713, 723 et 733 sont préférentiellement plus longs que les guides de lumières 413, 423 et 433, de sorte que la sortie de tous les guides soit dans un même plan 80.

Les roues colorées 71 et 72 sont synchronisées entre elles de sorte que les images 714, 724 et 734 soient éclairés, à un instant donné, par trois faisceaux monochromes 761, 771 et 770 de couleurs différentes, chacun des faisceaux éclairant l'imageur qui lui est associé séquentiellement avec trois couleurs différentes.

Préférentiellement, mais non nécessairement, les roues 71 et 72 d'une part, et 41 et 42, d'autre part, sont synchronisées de sorte que les changements de segments éclairés par un faisceau d'illumination incident se font au même moment. Ainsi, le contrôle des imageurs 414, 424, 434, 714, 724 et 734 est facilité.

Le second mode de réalisation est particulièrement bien adapté à une utilisation d'imageurs insensibles à la polarisation tel que des DMD. Néanmoins, l'utilisation de LCOS et LCD est aussi possible avec récupération de polarisation similaire à celle mise en oeuvre pour le dispositif 2.

Le premier mode de réalisation est particulièrement bien adapté à une utilisation d'imageurs fonctionnant avec une lumière polarisée. Chacun des imageurs 414, 424, 434, 714, 724 et 734 est bien entendu orienté correctement par rapport au faisceau d'illumination monochrome incident. Les polarisations étant différentes dans les ensembles d'imagerie 76 et 77, des moyens de retournement de la polarisation (par exemple une lame λ/2) peuvent être placées dans l'un des ensembles d'imagerie (pour tourner la polarisation et garder la même orientations des imageurs dans les deux ensembles 76 et 77) préférentiellement avant la première roue colorée ou entre les guides de lumière et les imageurs de cet ensemble.

Selon une variante du second mode de réalisation mettant en oeuvre trois ensembles d'imagerie similaires à l'ensemble 76, on utilise des premiers moyens de séparation réfléchissant les deux tiers du flux incidents et transmettent un tiers du flux (les moyens de séparation sont alors, par exemple, de type « dot mirrors » avec une surface réfléchissante représentant les deux tiers de la surface totale). Le faisceau transmis éclaire alors un premier ensemble d'imagerie. Le faisceau réfléchi éclaire alors des seconds moyens de séparation qui séparent en deux faisceaux polychrome le faisceau incident. Chacun de ces faisceaux éclaire alors l'un des deux autres ensembles d'imagerie. L'image obtenue sur la surface de projection comprend alors neuf parties juxtaposées de brillance uniforme.

Selon le même principe, des variantes de l'invention mettent en oeuvre 3n imageurs (n étant supérieur ou égal à 2 et valant par exemple 2, 3, 4...), le faisceau source polychromatique étant séparé par des miroirs à réflexion partielle en *n* faisceaux source polychromatique de brillance sensiblement égale, chacun des *n* faisceaux éclairant un ensemble d'imagerie. L'image projetée comprend alors 3*n* parties de brillance uniforme.

Selon d'autres variantes, les premiers et deuxième modes de réalisation sont combinés en mettant en oeuvre, par exemple, 6*n* imageurs : un faisceau polychromatique source, non polarisé est séparé en 6*n* faisceaux polychromatiques polarisés par moyens de séparations adaptés (par exemple, un polariseur sépare le faisceau source en deux faisceaux polarisés qui sont séparés chacun en *n* faisceaux polarisés polychromatiques ; on peut aussi envisager une mise en oeuvre n miroirs séparent le faisceau source en n faisceaux non polarisés qui chacun éclaire un polariseur, ce qui permet d'obtenir 6*n* faisceaux polychromatiques polarisés), les 6*n* faisceaux polychromatiques polarisés éclairant chacun un ensemble d'imagerie.

Bien entendu, l'invention ne se limite pas aux modes de réalisation décrits précédemment.

L'homme du métier pourra notamment envisager tout type de lampe adaptée à une projection sur grand écran.

De même, de multiples types de moyens de séparations, lentilles, guides, roues colorées et moteurs optiques sont compatibles avec l'invention.

En outre, la structure même du système de projection peut être modifiée tout en restant dans le cadre de l'invention. Ainsi, l'image projetée peut être de forme variable avec par exemple des parties dont le sens de la longueur est horizontal ou vertical, qui peuvent être juxtaposées les unes en dessous les autres et/ou les unes à coté des autres.

Les roues colorées sont, selon l'invention, utilisées en transmission et en réflexion et peuvent, suivant différentes variantes, soit réfléchir soit transmettre une couleur primaire.

Selon une autre variante de l'invention, on sépare le faisceau polychromatique en trois faisceaux monochromes tel que décrit dans le projecteur 2 décrit en regard de la figure 2. Selon cette variante, chacun des faisceaux monochromes est séparé en plusieurs faisceaux (par exemple 2, 3, 4, ...) par des moyens de séparation de type polariseur ou miroirs semi-réfléchissant (miroirs traités ou « dot-mirrors ») éclairant chacun un imageur. Les moyens de séparations sont placés sur le trajet des faisceaux monochromes (par exemple entre une des roues colorées 41 et 42 ou le miroir 43 et l'entrée du guide d'onde correspondant. Des lentilles de focalisation pourront également être ajoutée si nécessaire. Ce mode de réalisation permet d'obtenir une image projetée en 3, 6, 9, 12 parties ou plus avec simplement deux roues colorées.

Selon encore une autre variante de l'invention, les modes de réalisation illustrés en regard des figures 6 et 12 sont combinés. On peut ainsi obtenir un projecteur à plusieurs étages projetant des sous-images à trois couleurs à un instant donné, et qui se superposent, chacun des étages correspondant à un ensemble d'imagerie générant trois sous-images monochromes qui se superposent.

Selon d'autres variantes de l'invention, les modes de réalisation illustrés en regard des figures 6 et 12 sont combinés avec le mode de réalisation décrit en figure 10, l'appareil de projection mettant alors en oeuvre des roues colorées réfléchissant chacun un faisceau monochrome.

## Revendications

1. Système de projection (2, 6, 25, 120) comprenant une source lumineuse apte à générer un faisceau d'illumination source polychromatique (400), et un groupe d'au moins un ensemble d'imagerie (76, 77),
**caractérisé en ce que**
chaque ensemble d'imagerie dudit groupe comprend:
- deux roues colorées distinctes (41, 42, 71, 72), dites respectivement première et seconde roue colorées;
- trois imageurs distincts (414, 424, 434), dits respectivement premier, second et troisième imageurs; et
- trois objectifs distincts, dits respectivement premier, second et troisième objectifs; ladite première roue colorée étant éclairée par au moins une partie dudit faisceau d'illumination source polychromatique, dite premier faisceau source (400, 700, 750) et étant apte à séparer ledit premier faisceau source en un premier faisceau monochrome (411, 711, 761) et en un faisceau bicolore (410, 710), ledit premier faisceau monochrome éclairant le premier imageur et ledit faisceau bicolore étant transmis vers ladite seconde roue colorée; et
ladite seconde roue colorée étant éclairée par ledit faisceau bicolore et étant apte à séparer ledit faisceau bicolore en des second (421, 721, 771) et troisième (420, 720, 770) faisceaux monochromes, éclairant respectivement lesdits second et troisième imageurs, et
lesdits imageurs et objectifs étant positionnés de sorte à projeter trois images juxtaposées ou superposées sur une surface de projection prédéterminée.

2. Système selon la revendication 1, **caractérisé en ce que** ledit ensemble d'imagerie comprend, en outre, un miroir de repli (43, 73) placé sur le trajet dudit troisième faisceau monochrome.

3. Système selon l'une quelconque des revendications 1 et 2, **caractérisé en ce que** ledit ensemble d'imagerie comprend des moyens de focalisation sur chacun des trajets desdits premier, second et troisième faisceaux monochromes,
lesdits moyens de focalisation comprenant chacun un groupe d'au moins une lentille (412, 422, 432) et un guide de lumière (413, 423, 433), chacun des groupes d'au moins une lentille focalisant respectivement les premier, second et troisième faisceaux monochromes sur l'entrée du guide de lumière correspondant, la sortie de chacun des guides de lumière étant associée respectivement aux premier, second et troisième imageurs.

4. Système selon l'une quelconque des revendications 1 à 3, **caractérisé en ce que** ledit ensemble d'imagerie comprend un groupe d'au moins une lentille (44, 74) sur le trajet dudit faisceau bicolore, ledit groupe d'au moins une lentille focalisant ledit faisceau bicolore sur ladite seconde roue colorée.

5. Système selon l'une quelconque des revendications 1 à 4, **caractérisé en ce que** ledit groupe d'au moins un ensemble d'imagerie comprend au moins deux ensembles d'imagerie et des moyens de polarisation séparant ledit faisceau d'illumination source polychromatique en deux faisceaux d'illumination polychromatiques polarisés distincts éclairant respectivement des ensembles d'imagerie distincts.

6. Système selon l'une quelconque des revendications 1 à 5, **caractérisé en ce que** ledit groupe d'au moins un ensemble d'imagerie comprend au moins deux ensembles d'imagerie et des miroirs semi-réfléchissants séparant ledit faisceau d'illumination source polychromatique en au moins deux faisceaux d'illumination polychromatiques distincts éclairant respectivement des ensembles d'imagerie distincts.

7. Système selon la revendication 6, **caractérisé en ce que** lesdits miroirs semi-réfléchissants sont des miroirs comprenant des zones réfléchissantes et des zones transparentes.

8. Système selon l'une quelconque des revendications 1 à 7, **caractérisé en ce que** au moins un desdits ensembles d'imagerie dudit groupe contient des premier, second et troisième moteurs optiques comprenant respectivement les premier, second et troisième imageurs et des premier, second et troisième objectifs, lesdits imageurs et objectifs étant positionnés de sorte à projeter trois images juxtaposées sur une surface de projection prédéterminée.

9. Système selon l'une quelconque des revendications 1 à 8, **caractérisé en ce que** au moins un desdits ensembles d'imagerie dudit groupe contient des premier, second et troisième moteurs optiques comprenant respectivement les premier, second et troisième imageurs et des premier, second et troisième objectifs, lesdits imageurs et objectifs étant positionnés de sorte à projeter trois images superposées sur une surface de projection prédéterminée.

10. Système selon l'une quelconque des revendications 1 à 9, **caractérisé en ce qu'**il comprend :
- des moyens de découpe de chaque image à projeter en sous-images, chacune des sous-images étant associée à un imageur dudit système ; et
- des moyens de sélection d'informations représentatives d'une sous-image correspondant à une couleur primaire, dite sous-image monochrome, pour chacun des imageurs dudit système et de transmission à chacun des imageurs dudit système de ladite sous-image monochrome associée, la couleur primaire sélectionnée dépendant de la couleur du faisceau monochrome éclairant ledit imageur à un instant déterminé.

## Claims

1. Projection system (2, 6, 25, 120) comprising a light source capable of generating a polychromatic source illumination beam (400), and a group of at least one imaging assembly (76, 77),
**characterized in that** each imaging assembly of said group comprises:
- two separate colored wheels (41, 42, 71, 72), respectively called first and second colored wheels,
- three separate imagers (414, 424, 434), respectively called first, second and third imagers; and
- three separate objectives, respectively called first, second and third objectives;
said first colored wheel being illuminated by at least one part of the polychromatic beam, called first source beam (400, 700, 750), and capable of separating said first source beam into a first monochromatic beam (411, 711, 761) and into a two-tone beam (410, 710), said first monochromatic beam illuminating the first imager and said two-tone beam being transmitted toward said second colored wheel; and
said second colored wheel being illuminated by said two-tone beam and capable of separating said two-tone beam into second (421, 721, 771) and third (420, 720, 770) monochromatic beams, respectively illuminating said second and third imagers,
said imagers and objectives being positioned in order to project three adjacent or superimposed images on a predetermined projection surface.

2. The system as claimed in claim 1, **characterized in that** said imaging assembly additionally comprises an inclined mirror (43, 73) placed in the path of said third monochromatic beam.

3. The system as claimed in either one of claims 1 and 2, **characterized in that** said imaging assembly comprises focusing means in each of the paths of said first, second and third monochromatic beams, said focusing means each comprising a group of at least one lens (412, 422, 432) and one light guide (413, 423, 433), each of the groups of at least one lens respectively focusing the first, second and third monochromatic beams onto the entry of the corresponding light guide, the exit of each of the light guides being respectively associated with the first, second and third imagers.

4. The system as claimed in any one of claims 1 to 3, **characterized in that** said imaging assembly comprises a group of at least one lens (44, 74) in the path of said two-tone beam, said group of at least one lens focusing said two-tone beam onto said second colored wheel.

5. The system as claimed in any one of claims 1 to 4, **characterized in that** said group of at least one imaging assembly comprises at least two imaging assemblies and polarization means separating said polychromatic source illumination beam into two separate polychromatic illumination beams respectively illuminating separate imaging assemblies.

6. The system as claimed in any one of claims 1 to 5, **characterized in that** said group of at least one imaging assembly comprises at least two imaging assemblies and semi-transparent mirrors separating said polychromatic source illumination beam into at least two separate polychromatic illumination beams respectively illuminating separate imaging assemblies.

7. The system as claimed in claim 6, **characterized in that** said semi-transparent mirrors are mirrors comprising reflecting regions and transparent regions.

8. The system as claimed in any one of claims 1 to 7, **characterized in that** at least one of said imaging assemblies of said group contains first, second and third optical motors respectively comprising the first, second and third imagers and first, second and third objective lenses, said imagers and lenses being positioned in such a manner as to project three images side by side onto a given projection surface.

9. The system as claimed in any one of claims 1 to 8, **characterized in that** at least one of said imaging assemblies of said group contains first, second and third optical motors respectively comprising the first, second and third imagers and first, second and third objective lenses, said imagers and lenses being positioned in such a manner as to project three superimposed images onto a given projection surface.

10. The system as claimed in any one of claims 1 to 9, **characterized in that** it comprises:
- means for dividing up each image to be projected into sub-images, each of the sub-images being associated with an imager of said system; and
- means for selecting information representative of a sub-image corresponding to one primary color, called monochromatic sub-image, for each of the imagers of said system and for transmitting to each of the imagers of said system said associated monochromatic sub-image, the selected primary color depending on the color of the monochromatic beam illuminating said imager at a given moment in time.

## Patentansprüche

1. Projektionssystem (2, 6, 25, 120) mit einer Lichtquelle, die geeignet ist, einen polychromatischen Quellbeleuchtungsstrahl (400) zu erzeugen, und einer Gruppe mit mindestens einer bildgebenden Anordnung (76, 77),
**dadurch gekennzeichnet, dass**
jede bildgebende Anordnung der Gruppe Folgendes umfasst:
- zwei einzelne Farbräder (41, 42, 71, 72), bei denen es sich um das so genannte erste beziehungsweise zweite Farbrad handelt,
- drei einzelne Bildgeber (414, 424, 434), bei denen es sich um den so genannten ersten, zweiten beziehungsweise dritten Bildgeber handelt, und
- drei einzelne Objektive, bei denen es sich um das so genannte erste, zweite beziehungsweise dritte Objektiv handelt,
wobei das erste Farbrad durch mindesten einen Teil des polychromatischen Quellbeleuchtungsstrahls, bei dem es sich um den so genannten ersten Quellstrahl (400, 700, 750) handelt, beleuchtet wird und geeignet ist, den ersten Quellstrahl in einen ersten monochromen Strahl (411, 711, 761) und in einen zweifarbigen Strahl (410, 710) zu teilen, wobei der erste monochrome Strahl den ersten Bildgeber beleuchtet und der zweifarbige Strahl zu dem zweiten Farbrad übertragen wird, und
wobei das zweite Farbrad durch den zweifarbigen Strahl beleuchtet wird und geeignet ist, den zweifarbigen Strahl in zweite (421, 721, 771) und dritte (420, 720, 770) monochrome Strahlen zu teilen, die den zweiten beziehungsweise dritten Bildgeber beleuchtet, und die Bildgeber und Objektive derart positioniert sind, dass drei aneinander liegende oder aufeinander liegende Bilder auf eine vorbestimmte Projektionsfläche projiziert werden.

2. System nach Anspruch 1, **dadurch gekennzeichnet, dass** die bildgebende Anordnung ferner einen Umlenkspiegel (43, 73) umfasst, der in dem Weg des dritten monochromen Strahls angeordnet ist.

3. System nach einem der Ansprüche 1 und 2, **dadurch gekennzeichnet, dass** die bildgebende Anordnung Fokussierungsmittel in die jeweiligen Wege des ersten, des zweiten und des dritten monochromen Strahls umfasst, wobei die Fokussierungsmittel jeweils eine Gruppe aus mindestens einer Linse (412, 422, 432) und einem Lichtleiter (412, 423, 433) umfassen, wobei die jeweiligen Gruppen aus mindestens einer Linse den ersten, zweiten beziehungsweise dritten monochromen Strahl auf den Eingang des entsprechenden Lichtleiters fokussieren, wobei der Ausgang der jeweiligen Lichtleiter dem ersten, zweiten beziehungsweise dritten Bildgeber zugeordnet ist.

4. System nach einem der Ansprüche 1 bis 3, **dadurch gekennzeichnet, dass** die bildgebende Anordnung eine Gruppe aus mindestens einer Linse (44, 74) in dem Weg des zweifarbigen Strahls umfasst, wobei die Gruppe aus mindestens einer Linse den zweifarbigen Strahl auf das zweite Farbrad fokussiert.

5. System nach einem der Ansprüche 1 bis 4, **dadurch gekennzeichnet, dass** die Gruppe aus mindestens einer bildgebenden Anordnung mindestens zwei bildgebende Anordnungen und Polarisationsmittel umfasst, die den polychromatischen Quellbeleuchtungsstrahl in zwei einzelne polarisierte polychromatische Beleuchtungsstrahlen teilen, die jeweils einzelne bildgebende Anordnungen beleuchten.

6. System nach einem der Ansprüche 1 bis 5, **dadurch gekennzeichnet, dass** die Gruppe aus mindestens einer bildgebenden Anordnung mindestens zwei bildgebende Anordnungen und halbreflektierende Spiegel umfasst, die den polychromatischen Quellbeleuchtungsstrahl in mindestens zwei einzelne polychromatische Beleuchtungsstrahlen teilen, die jeweils einzelne bildgebende Anordnungen beleuchten.

7. System nach Anspruch 6, **dadurch gekennzeichnet, dass** es sich bei den halbreflektierenden Spiegeln um Spiegel mit reflektierenden Bereichen und mit transparenten Bereichen handelt.

8. System nach einem der Ansprüche 1 bis 7, **dadurch gekennzeichnet, dass** mindestens eine der bildgebenden Anordnungen der Gruppe einen ersten, einen zweiten und einen dritten optischen Motor umfasst, welche Motoren den ersten, den zweiten beziehungsweise den dritten Bildgeber und ein erstes, ein zweites und ein drittes Objektiv umfassen, wobei die Bildgeber und Objektive derart positioniert sind, dass drei aneinander liegende Bilder auf eine vorbestimmte Projektionsfläche projiziert werden.

9. System nach einem der Ansprüche 1 bis 8, **dadurch gekennzeichnet, dass** mindestens eine der bildgebenden Anordnungen der Gruppe einen ersten, einen zweiten und einen dritten optischen Motor umfasst, welche Motoren den ersten, den zweiten beziehungsweise den dritten Bildgeber und ein erstes, ein zweites und ein drittes Objektiv umfassen, wobei die Bildgeber und Objektive derart positioniert sind, dass drei aufeinander liegende Bilder auf eine vorbestimmte Projektionsfläche projiziert werden.

10. System nach einem der Ansprüche 1 bis 9, **dadurch gekennzeichnet, dass** es Folgendes umfasst:
- Mittel, um jedes zu projizierende Bild in Subbilder zu schneiden, wobei jedes der Subbilder einem Bildgeber des Systems zugeordnet ist, und
- Mittel, um für die jeweiligen Bildgeber des Systems Informationen auszuwählen, die für ein Subbild repräsentativ sind, das einer Grundfarbe entspricht und bei dem es sich um ein so genanntes monochromes Subbild handelt, und um an die jeweiligen Bildgeber des System das zugeordnete monochrome Subbild zu übertragen, wobei die ausgewählte Grundfarbe von der Farbe des monochromen Strahls abhängt, der den Bildgeber zu einem bestimmten Zeitpunkt beleuchtet.
